# EUROPEAN PATENT APPLICATION

(11) **EP 1 803 623 A1**
(43) Date of publication of application: **04.07.2007**
(21) Application number: 06384018.5
(22) Date of filing: 21.12.2006
(51) Int. Cl.: B60W 30/14, B60K 28/00, B62K 9/00, B60W 10/08, B60W 10/18

(54) **Remote controlled automotive toy vehicle**

(30) Priority: 30.12.2005 ES 200502853 U
(71) Applicant: Veronica Torres, Pérez, 08210 Barbera del Valles Barcelona (ES)
(72) Inventor: Veronica Torres, Pérez, 08210 Barbera del Valles Barcelona (ES)

(57) **Abstract**

This invention consists of a remote controlled automotive toy vehicle that is made up of a rolling structure, a seat for the child, an electric engine (4) and a battery (2).

The vehicle is characterized by having a receiving circuit (1) that receives a signal emitted by a remote control that is handled by an adult who breaks the current to the electric engine (4), thus stopping the car, and changing the position of a switch that activates the break shoes located on the axel. The break can activate the front, back or both of the wheel axels and the break shoes may open or close in order to actually break, according to if they are set up inside or outside the axel.

This device allows the vehicle to be stopped in case the child is found to be in a dangerous situation.

## Description

### OBJECT OF THE INVENTION

This invention refers to a remote controlled automotive toy vehicle that is made up of a rolling structure, a seat for the child, an electric engine and a battery.

The vehicle is characterized by having a receiving circuit that receives a signal emitted by a remote control that is handled by an adult who breaks the current to the electric engine, thus stopping the car. The receiving circuit has at least one antenna that activates a normally closed switch that is set in series with the battery that feeds the electric engine and that also deactivates a normally open switch that controls the break shoes of at least one of the wheel axels.

### BACKGROUND FOR THE INVENTION

In the current market there are several different child vehicle models consisting of cars, motorcycles or other battery operated vehicles that are driven by the child and therefore may be dangerous for that child as well as other people that are close by.
Through this invention we aim to incorporate a device into these vehicles that allows an adult being close by to cut the electrical current and therefore break the vehicle, either by a remote control or distance control, if a dangerous situation arises.

### DESCRIPTION OF THE INVENTION

This invention refers to a remote controlled automotive toy vehicle that is made up of a rolling structure, a seat for the child, an electric engine and a battery.

The vehicle is characterized by having a receiving circuit that receives a signal emitted by a remote control that is handled by an adult who breaks the current to the electric engine, thus stopping the car. The receiving circuit has at least one antenna that activates a normally closed switch that is set in series with the battery that feeds 10 the electric engine and that also deactivates a normally open switch that controls the breaks shoes of at least one of the wheel axels.

By use of this device the vehicle may be stopped by using a remote control handled by an adult, given the case of a dangerous situation for the child that requires 15 that the vehicle by stopped.

### DESCRIPTION OF THE DRAWINGS

A set of drawings are attached to the present descriptive statement which are illustrative of the preferred embodiment example but are not to be considered as limitative of the invention.

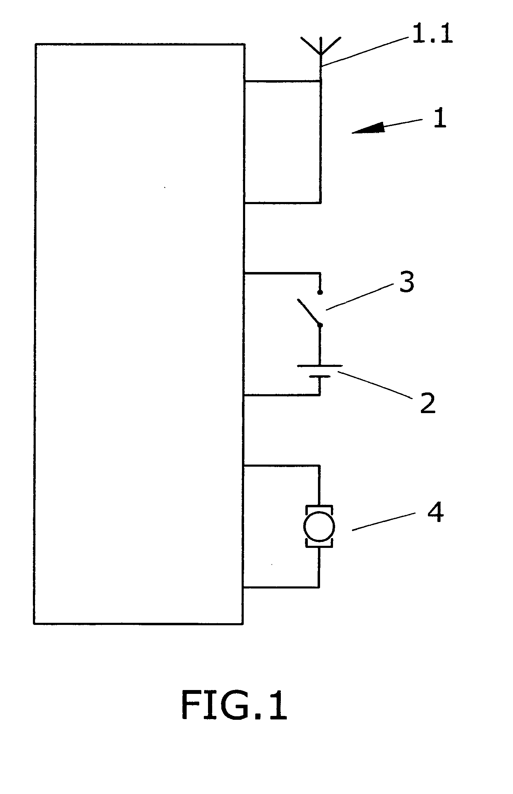

Figure 1 is a schematic representations of the toy vehicle's electronic circuit.

### PREFERRED EMBODIMENT OF THE INVENTION

This invention refers to a remote controlled automotive toy vehicle that is made up of a rolling structure, a seat for the child, an electric engine and a battery.

The vehicle is characterized by having a (1) receiving circuit that receives a signal emitted by a remote control that is handled by an adult who breaks the current to the electric engine, thus (4) stopping the car. The receiving circuit has at least one antenna (1.1) that activates a normally (3) closed switch that is set in series 10 with the battery (2) that feeds the electric engine (4) and that also deactivates a normally open switch that controls the breaks of at least one of the wheel axels. The break can activate the front, back or both of the wheel axels and the break shoes may open or close in order to actually break, according to if they are set up inside or outside the axel.

Variations in materials, shape, size and layout of the components do not alter the essence of this inventions. The abovementioned items are described in a non-limiting manner. The description of the same is enough for the item(s) to be reproduced by an expert.

## Claims

1. - Remote controlled automotive toy vehicle that is made up of a rolling structure, a seat for the child, an electric engine and a battery. It is s **characterized by** having a (1) receiving circuit that receives a signal emitted by a remote control that is handled by an adult who breaks the current to the electric engine, thus (4) stopping the car. The receiving circuit has at least one antenna (1.1) that activates a normally (3) closed switch that is set in series with the battery (2) that feeds the electric engine (4) and that also deactivates a normally open switch that controls 10 the breaks of at least one of the wheel axels. The break can activate the front, back or both of the wheel axels and the break shoes may open or close in order actually do the breaking action, according to if they are set up inside or outside the axel.

2. - A remote controlled automotive toy vehicle, according to claim 1, **characterized by** the fact that the break can activate the front, back or both of the wheel axels.

3. - A remote controlled automotive toy vehicle, according to claim 1, **characterized by** the fact that the break shoes may open or close in order to actually break.
